(19) Europäisches Patentamt
European Patent Office
Office européen des brevets

(11) **EP 4 571 152 A1**

(12) **EUROPEAN PATENT APPLICATION**
published in accordance with Art. 153(4) EPC

(43) Date of publication:
**18.06.2025 Bulletin 2025/25**

(21) Application number: **23852512.5**

(22) Date of filing: **07.08.2023**

(51) International Patent Classification (IPC):
**F16J 15/38** (2006.01)

(52) Cooperative Patent Classification (CPC):
**F16J 15/38**

(86) International application number:
**PCT/JP2023/028673**

(87) International publication number:
**WO 2024/034550 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 JP 2022128834**

(71) Applicant: **Eagle Industry Co., Ltd.**
**Minato-ku**
**Tokyo 105-8587 (JP)**

(72) Inventors:
• **KONDO, Masahiro**
**Tokyo 105-8587 (JP)**
• **AKIYOSHI, Norimitsu**
**Tokyo 105-8587 (JP)**
• **MORIYAMA, Naomichi**
**Tokyo 105-8587 (JP)**
• **HISHIKAWA, Takao**
**Tokyo 105-8587 (JP)**

(74) Representative: **Seifert, Ruth**
**Patentquadrat**
**Patentanwaltsgesellschaft mbH**
**Pettenkoferstraße 27a**
**80336 München (DE)**

(54) **SECONDARY SEAL**

(57) The present invention provides a secondary seal capable of ensuring a sealing property even under a high-speed rotation environment. The secondary seal is an annular secondary seal 1 sandwiched by a rotating seal ring 4 and a holding member 3 that holds the rotating seal ring 4 in the radial direction, and configured to seal a portion between the rotating seal ring 4 and the holding member 3, wherein in every section perpendicular to in the circumferential direction of the secondary seal 1, an area of the section is smaller on a radially inner side of an axial direction line that passes through a radial center of the section than on a radially outer side of the axial direction line.

Fig.3

## Description

{TECHNICAL FIELD}

The present invention relates to a secondary seal, for example, a secondary seal to be used for a rotating seal ring.

{BACKGROUND ART}

In the field of sealing in a rotating machine of an automobile, a general industrial machine, etc., a mechanical seal is used for preventing leakage of a sealed fluid. Such a mechanical seal includes a rotating shaft inserted through a housing, a stationary seal ring attached to the housing, and a rotating seal ring attached to the rotating shaft, wherein by rotating the rotating seal ring together with the rotating shaft, a sliding surface of the stationary seal ring and a sliding surface of the rotating seal ring are rotated to slide with respect to each other, and leakage of a sealed fluid arranged on the radially one side of the sliding surface to the radially other side is prevented. Also, an annular secondary seal having elasticity is arranged between the rotating shaft and the rotating seal ring, and a portion between the rotating shaft and the rotating seal ring is sealed in general.

For example, a mechanical seal shown in Patent Citation 1 includes a sleeve fixed to a shaft. The sleeve includes a flange portion that extends to the radially outer side from the shaft, and a rotating ring holding portion that extends in the axial direction from a radially outer end portion of the flange portion. A rotating ring is arranged on the radially inner side of the rotating ring holding portion. Also, a holder inserted through the rotating ring is fixed to the flange portion, and an O ring is arranged between the rotating ring and the holder.

{CITATION LIST}

{Patent Literature}

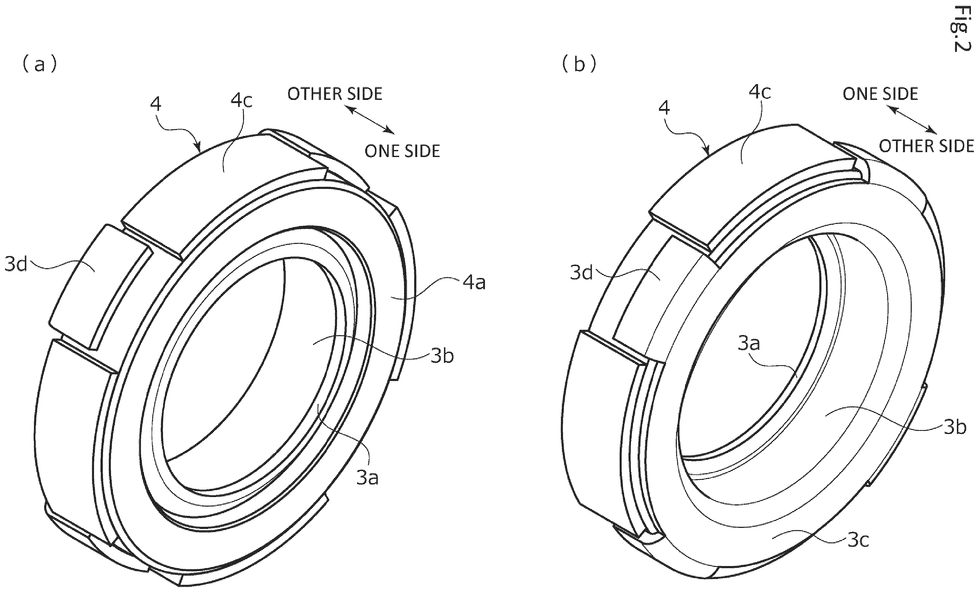

Patent Citation 1: International Publication No. 2015-108107 (Page 6, FIG. 2)

{SUMMARY OF INVENTION}

{Technical Problem}

In the mechanical seal of Patent Citation 1, it is possible to prevent a sealed fluid from leaking to the atmosphere side from between the rotating ring and the holder by the O ring. However, under an environment where the shaft is rotated at high speed, the O ring is deformed so as to move to the radially outer side by centrifugal force. Thus, an inner periphery of the O ring and the holder are separate from each other, and there is a fear that leakage of the sealed fluid is generated.

The present invention has been made in view of such a problem and an object of the present invention is to provide a secondary seal capable of ensuring a sealing property even under a high-speed rotation environment.

{Solution to Problem}

In order to solve the foregoing problem, a secondary seal according to the present invention is a secondary seal formed in an annular shape, sandwiched by a rotating seal ring and a holding member that holds the rotating seal ring in a radial direction, and configured to seal a portion between the rotating seal ring and the holding member, wherein in every section perpendicular to a circumferential direction of the secondary seal, an area of the section is smaller on a radially inner side of an axial direction line that passes through a radial center of the section than on a radially outer side of the axial direction line. According to the aforesaid feature of the present invention, when centrifugal force acts, the secondary seal is not easily deformed in the radial direction. Thereby, the radially inner side of the secondary seal does not easily float up from a sealed surface. Therefore, it is possible to ensure a sealing property even under a high-speed rotation environment.

It may be preferable that the secondary seal is made of one material. According to this preferable configuration, it is possible to prevent generation of breakage and division.

It may be preferable that the secondary seal has a radially outer side expanded portion and a radially inner side expanded portion, each of the radially outer side expanded portion and the radially inner side expanded portion has a curve shape that is projected in the radial direction, and the radially inner side expanded portion has a smaller curvature radius than the radially outer side expanded portion. According to this preferable configuration, it is possible to make the secondary seal be not easily deformed in the radial direction. Also, it is possible to reduce an area of contact of the radially inner side of the secondary seal with respect to the sealed surface. Thus, the radially inner side of the secondary seal does not easily float up from the sealed surface and the secondary seal is easily inserted at the time of assembling.

It may be preferable that between the radially inner side expanded portion and the radially outer side expanded portion, a base portion having an axial dimension that is not less than an axial dimension of part of the radially outer side expanded portion or the holding member contact with the rotating seal ring in is provided. According to this preferable configuration, it is possible to prevent the secondary seal from rolling and moving in the axial direction at the time of inserting the secondary seal.

It may be preferable that the axial dimension of the base portion is not less than a radial dimension between the rotating seal ring and the holding member at a point where the secondary seal is sandwiched.

According to this preferable configuration, the axial dimension of the secondary seal is larger than the radial dimension of the sandwiched space. Thus, it is possible to prevent the secondary seal from rolling and moving.

It may be preferable that the secondary seal is formed in a symmetrical shape in an axial direction. According to this preferable configuration, when the centrifugal force acts, the secondary seal is deformed in a well-balanced manner, and hence the sealing property is good.

{BRIEF DESCRIPTION OF DRAWINGS}

FIG. 1 is a longitudinal cross-sectional view illustrating a mechanical seal in which a secondary seal according to an embodiment of the present invention is used.
FIG. 2A is a perspective view in which a state where a rotating seal ring and a case are assembled is seen from one side in the embodiment; and FIG. 2B is a perspective view in which the state where the rotating seal ring and the case are assembled is seen from the other side in the embodiment.
FIG. 3 is a cross-sectional view illustrating a structure of the secondary seal in the embodiment.
FIGS. 4A to 4C are explanatory views illustrating procedure of assembling the rotating seal ring and the case in the embodiment.

{DESCRIPTION OF EMBODIMENTS}

A mode for carrying out a secondary seal according to the present invention will be described on the basis of an embodiment.

{Embodiment}

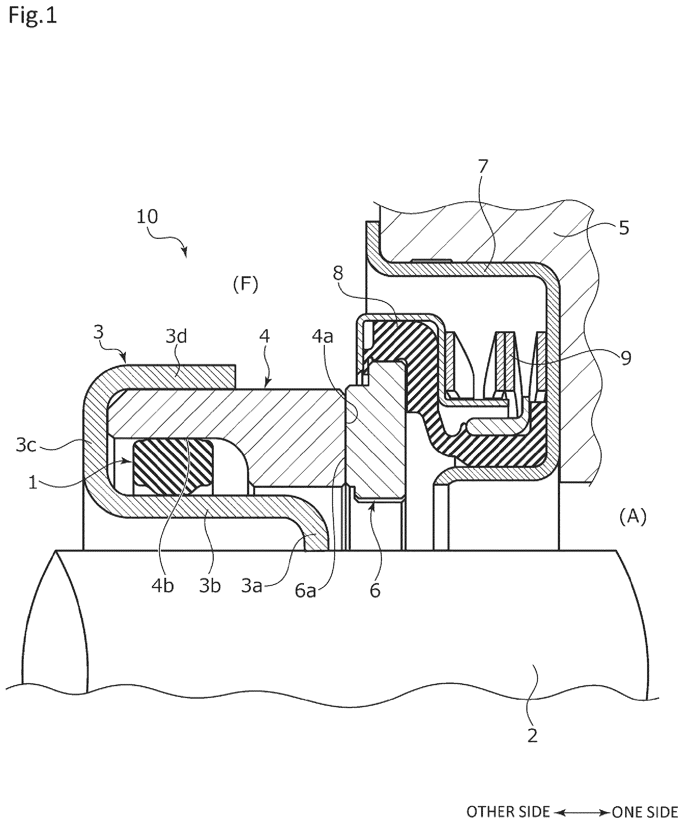

A secondary seal according to the embodiment of the present invention will be described with reference to FIGS. 1 to 4. Hereinafter, a description will be given with the right side on a paper plane of FIG. 1 serving as the axially one side, and the left side on the paper plane serving as the axially other side.

A secondary seal 1 according to the embodiment of the present embodiment is a secondary seal to be applied to a mechanical seal 10 that is used in the field of sealing in a rotating machine of an automobile, a general industrial machine, etc.

As illustrated in FIG. 1, the mechanical seal 10 is an inside mechanical seal that seals a sealed fluid F to be leaking from the radially outer side of a sliding surface toward the radially inner side, and is mainly configured by a rotating seal ring 4 provided in a rotating shaft 2 in a state of being rotatable together with the rotating shaft 2 via a case 3 serving as a holding member, and a stationary seal ring 6 fixed to a housing 5 of an attached device via a case 7.

The rotating seal ring 4 and the stationary seal ring 6 are representatively formed by a combination of SiC (hard material) and SiC (hard material) or a combination of SiC (hard material) and carbon (soft material). However, the present invention is not limited to this and any sliding material that is used as a sliding material for a mechanical seal can be applied. It is noted that as the SiC, a sintered body with boron, aluminum, carbon, etc., serving as a sintering agent, as well as a material made of two or more types of phases which are different in component and composition, for example, SiC in which graphite particles are dispersed, reactive sintering SiC made of SiC and Si, SiC-TiC, SiC-TiN, etc., are available. As the carbon, carbon in which a carbonaceous component and a graphite component are mixed, as well as resin molding carbon, sintered carbon, etc. can be utilized. Also, other than the sliding materials described above, a metal material, a resin material, a surface reforming material (coating material), a composite material, etc., can also be applied.

As illustrated in FIGS. 1 and 2, the case 3 is configured by a first plate portion 3a, a second plate portion 3b, a third plate portion 3c, and fourth plate portions 3d. The first plate portion 3a is fixed to an outer peripheral surface of the rotating shaft 2 and extends in an annular shape to the radially outer side. The second plate portion 3b extends in an annular shape from a radially outer end portion of the first plate portion 3a to the axially other side. The third plate portion 3c extends in an annular shape from the other side end portion of the second plate portion 3b to the radially outer side. Each of the fourth plate portions 3d extends from a radially outer end portion of the third plate portion 3c to the axially one side. This fourth plate portion 3d is an approximately one eighth arc when seen in the axial direction and is formed in a piece shape. A plurality of, in the present embodiment, four fourth plate portions 3d are formed while being separated from each other in the circumferential direction.

In an outer periphery of the rotating seal ring 4, a plurality of, in the present embodiment, four projecting portions 4c that extend in the radially outer direction are formed in the circumferential direction. The fourth plate portion 3d of the case 3 is inserted through a portion between the adjacent projecting portions 4c. Thereby, the rotating seal ring 4 is connected in a state where relative axial movement with respect to the case 3 is allowed and circumferential movement is regulated.

Also, in an inner periphery of the rotating seal ring 4, an annular recessed portion 4b that opens on the axially other side and on the radially inner side, the annular recessed portion having a stepped shape in a sectional view is formed. The secondary seal 1 is pressure-welded and arranged between the annular recessed portion 4b and the second plate portion 3b of the case 3. Thereby, the sealed fluid F is prevented from flowing out to the atmosphere A side from between the annular recessed portion 4b and the rotating shaft 2. It is noted that a specific structure of the secondary seal 1 will be described in detail later.

As illustrated in FIG. 1, a bellows 8 is arranged between the stationary seal ring 6 and the case 7. Thereby, the sealed fluid F is prevented to the atmosphere A side from flowing out from between the stationary seal ring 6 and the case 7.

Also, a spring 9 is arranged between the case 7 and the bellows 8. Thereby, a sliding surface 6a of the stationary seal ring 6 is pushed onto a sliding surface 4a of the rotating seal ring 4, and the sliding surfaces closely slide with respect to each other.

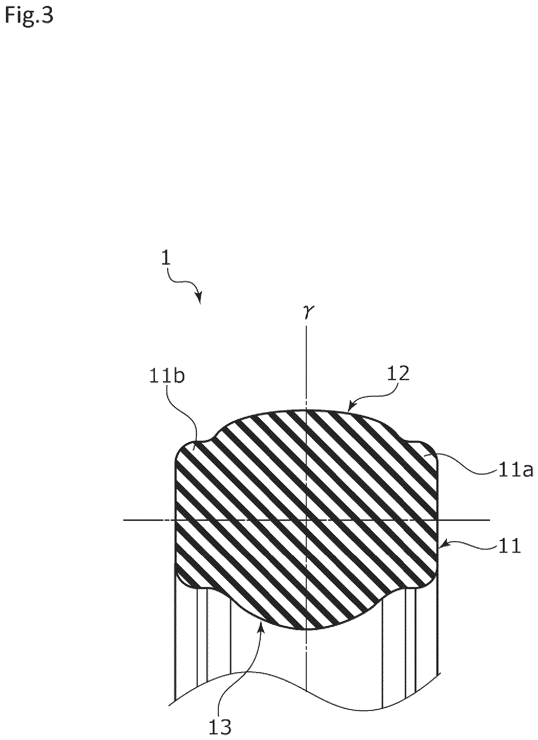

As illustrated in FIG. 3, the secondary seal 1 is formed in an annular shape, and has a base portion 11, a radially outer side expanded portion 12, and a radially inner side expanded portion 13. The base portion 11, the radially outer side expanded portion 12, and the radially inner side expanded portion 13 are made of an elastic body of the same material. It is noted that a material of the elastic body that configures the secondary seal 1 may be rubber or may be synthetic resin.

The base portion 11 is formed in a substantially oblong shape which is long in the axial direction in a sectional view. Also, an axial dimension of the base portion 11 is a length that is not less than an axial dimension of an abutment point of the secondary seal 1 with the rotating seal ring 4, or an axial dimension of an abutment point with the case 3. Also, the axial dimension of the base portion 11 is an axial dimension that is not less than a radial dimension of a point where the secondary seal 1 is sandwiched between the rotating seal ring 4 and the case 3.

The radially outer side expanded portion 12 serving as a radially outer portion of the secondary seal 1 is formed in a projected curve shape in the radially outer direction from an axial center portion of the base portion 11 in a sectional view.

The radially inner side expanded portion 13 serving as a radially inner portion of the secondary seal 1 is formed in a projected curve shape in the radially inner direction from the axial center portion of the base portion 11 in a sectional view.

On both the axial sides of the base portion 11, extended portions 11a, 11b extended in the axial direction over the radially outer side expanded portion 12 and the radially inner side expanded portion 13.

A curvature radius of the radially inner side expanded portion 13 is smaller than a curvature radius of the radially outer side expanded portion 12. That is, the radially inner side expanded portion 13 is formed in a more tapered shape than the radially outer side expanded portion 12.

With reference to FIG. 3, in the secondary seal 1, in an arbitrary section in the circumferential direction, an area on the radially inner side of an imaginary axial direction line that passes through a radial center (see a dashed broken line that extends in the axial direction in FIG. 3) is smaller than on the radially outer side.

Also, the secondary seal 1 is formed in a line-symmetrical shape with respect to an imaginary line γ that passes through an axial center and extends in the radial direction in a section thereof.

As described above, the curvature radius of the radially inner side expanded portion 13 is smaller than the curvature radius of the radially outer side expanded portion 12. Thus, a cross-sectional area of the radially outer side expanded portion 12 is larger than a cross-sectional area of the radially inner side expanded portion 13. Also, since the radially outer side expanded portion 12 and the radially inner side expanded portion 13 are made of the same material, rigidity of the radially outer side expanded portion 12 is higher than rigidity of the radially inner side expanded portion 13.

Radial rigidities $k_N$ of the radially outer side expanded portion 12 and the radially inner side expanded portion 13 can be determined by the following expression (1).

$$k_N = EA/L \qquad (1)$$

$k_N$:  radial rigidity
E:    Young's modulus
A:    cross-sectional area
L:    length

Therefore, regarding the same length, the rigidity of the radially outer side expanded portion 12 is higher than the rigidity of the radially inner side expanded portion 13. Thus, a radial deformation amount of the radially outer side expanded portion 12 when fixed radial force acts is smaller than a radial deformation amount of the radially inner side expanded portion 13.

Also, the base portion 11 has a radial length that is longer than the radially outer side expanded portion 12 and the radially inner side expanded portion 13. A cross-sectional area of the base portion 11 is larger than the cross-sectional area of the radially outer side expanded portion 12. That is, the base portion 11 has higher rigidity than the radially outer side expanded portion 12. It is noted that the cross-sectional area of the base portion 11 is preferably approximately 2 times to 30 times more than the cross-sectional area of the radially outer side expanded portion 12.

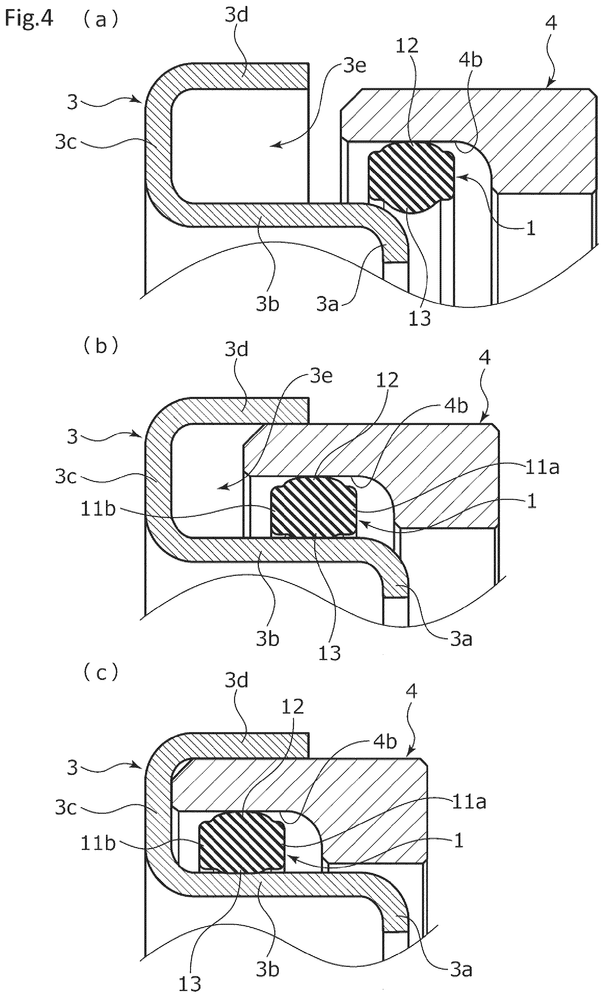

Next, assembling of the case 3 and the rotating seal ring 4 will be described by using FIG. 4.

As illustrated in FIG. 4A, first, the secondary seal 1 is inserted into the annular recessed portion 4b of the rotating seal ring 4 from the axially other side. At this time, the radial force hardly acts on the secondary seal 1.

Next, as illustrated in FIG. 4B, the rotating seal ring 4 to which the secondary seal 1 is assembled is inserted into a recessed portion 3e configured by the second plate portion 3b, the third plate portion 3c, and the fourth plate portions 3d of the case 3 from the axially one side.

Thereby, the secondary seal 1 is compressed in the radial direction between the rotating seal ring 4 and the second plate portion 3b of the case 3. At this time, the rigidity of the radially outer side expanded portion 12 is higher than the rigidity of the radially inner side expanded portion 13. Thus, the radially inner side expanded portion 13 is more largely deformed than the radially outer side expanded portion 12, and the radially outer side expanded portion 12 is hardly deformed.

Also, since the radially inner side expanded portion 13 is formed in a more tapered shape than the radially outer side expanded portion 12, it is possible to reduce an area of contact of the radially inner side expanded portion 13 with respect to the second plate portion 3b. Thus, an insertion task of the rotating seal ring 4 to which the secondary seal 1 is assembled is easily performed.

Also, at the time of inserting the rotating seal ring 4, the secondary seal 1 rolls and moves in the axial direction due to friction of the radially outer side expanded portion 12 against the rotating seal ring 4 and friction of the radially inner side expanded portion 13 against the second plate portion 3b. However, by bringing the extended portion 11a on the axially one side of the secondary seal 1 into contact with an inner peripheral surface of the rotating seal ring 4 that configures the annular recessed portion 4b, and by bringing the extended portion 11b on the axially other side into contact with the second plate portion 3b, the secondary seal 1 is regulated from rolling and moving in the axial direction.

As illustrated in FIG. 4C, by inserting the rotating seal ring 4 into the recessed portion 3e until an axially other end portion of the rotating seal ring 4 is abutted with the third plate portion 3c, the assembling of the case 3 and the rotating seal ring 4 is completed. In the member with which the radially outer side expanded portion 12 of the secondary seal 1 is brought into contact (in other words, the member with which the radially outer side expanded portion 12 among the members that sandwich the secondary seal 1 is brought into contact), a radial wall may be placed on the opposite side to the insertion direction of the secondary seal 1. Thus, the radially outer side expanded portion 12 slides at the time of insertion, and even when being misaligned, the secondary seal 1 is abutted with the radial wall and pushed in. That is, in FIG. 4, the radial wall of the annular recessed portion 4b is favorably provided.

As described above, in the secondary seal 1 of the present embodiment, the rigidity of the radially outer side expanded portion 12 is higher than the rigidity of the radially inner side expanded portion 13, and at the time of sandwiching the secondary seal 1 between the rotating seal ring 4 and the case 3 in the radial direction, as illustrated in FIG. 4C, the radially inner side expanded portion 13 is more largely deformed than the radially outer side expanded portion 12 and the radially outer side expanded portion 12 is hardly deformed. Thus, even when centrifugal force acts on the secondary seal 1 as illustrated in FIG. 1, the radially inner side expanded portion 13 is prevented from floating up from the second plate portion 3b of the case 3 serving as a sealed surface. Therefore, even under an environment where the rotating shaft 2 is rotated at high speed, it is possible to ensure a sealing property.

Also, the secondary seal 1 is made of the same material and the cross-sectional area of the radially outer side expanded portion 12 is larger than the cross-sectional area of the radially inner side expanded portion 13. Thus, it is possible to make rigidity in the radiation direction of the radially outer side expanded portion 12 larger than rigidity in the radiation direction of the radially inner side expanded portion 13.

Also, each of the radially outer side expanded portion 12 and the radially inner side expanded portion 13 has a curve shape that is formed in a projected shape in the radial direction, and the radially inner side expanded portion 13 has the smaller curvature radius than the radially outer side expanded portion 12. Thus, it is possible to make the radially outer side expanded portion 12 less easily deformed in the radial direction. Also, since the area of contact of the radially inner side expanded portion 13 with respect to the second plate portion 3b can be made small, the insertion task of the rotating seal ring 4 to which the secondary seal 1 is assembled is easily performed.

Also, the base portion 11 having the higher rigidity than the radially outer side expanded portion 12 is provided between the radially outer side expanded portion 12 and the radially inner side expanded portion 13. According to this, the base portion 11 is hardly deformed at the time of sandwiching between the rotating seal ring 4 and the case 3 in the radial direction. Thus, it is possible to ensure a radial thickness of the secondary seal 1 and enhance the sealing property.

Also, since the base portion 11 includes the extended portions 11a, 11b that extend in the axial direction, it is possible to prevent the secondary seal 1 from rolling and moving in the axial direction by the extended portions 11a, 11b at the time of inserting the secondary seal 1.

Also, the secondary seal 1 is formed in a symmetrical shape in the axial direction with respect to the imaginary line γ. Thus, when the centrifugal force acts, the secondary seal 1 is deformed in a well-balanced manner, and hence the sealing property is good.

Although the embodiment of the present invention has been described above with reference to the drawings, the specific configuration is not limited to the embodiment. The present invention includes changes and additions within a range not departing from the scope of the present invention.

For example, in the embodiment described above, the mode in which the secondary seal 1 is sandwiched by the rotating seal ring 4 and the case 3 on the radially inner side of the rotating seal ring 4 is exemplified.

However, the secondary seal may be sandwiched by the rotating seal ring and the holding member on the radially outer side of the rotating seal ring.

Also, in the embodiment described above, the radially outer side expanded portion 12 and the radially inner side expanded portion 13 are formed in a curve shape. However, the present invention is not limited to this but the radially outer portion may be formed in a rectangular shape, and further, the radially outer portion and the base portion may be integrated with each other. In addition to the above shape, or separately from the above shape, the radially inner portion may be formed in a rectangular shape, and in an arbitrary section in the circumferential direction, as long as an area is smaller on the radially inner side of the axial direction line that passes through the radial center than on the radially outer side, a free shape may be adopted.

Also, in the embodiment described above, the mode in which the rigidity of the base portion 11 is higher than the rigidity of the radially outer side expanded portion 12 is exemplified. However, the base portion may have the same rigidity as the radially outer portion.

Also, in the embodiment described above, the mode in which the axial dimension is larger than the radial dimension in the secondary seal 1 is exemplified. However, the radial dimension may be larger than the axial dimension.

Also, in the embodiment described above, the mode in which the spring 9 that holds surface pressure between the sliding surfaces is provided on the stationary seal ring 6 side is exemplified. However, the spring 9 may be provided on the rotating seal ring 4 side.

Also, in the embodiment described above, the mode in which the secondary seal 1 is formed in a symmetrical shape with respect to a radial line is exemplified. However, the secondary seal 1 may be formed in a non-symmetrical shape.

Also, in the embodiment described above, the mode of the inside mechanical seal that seals the sealed fluid to be leaking from the radially outer side of the sliding surface toward the radially inner side is exemplified. However, the mechanical seal may be an outside mechanical seal that seals the sealed fluid to be leaking from the radially inner side of the sliding surface toward the radially outer side.

{REFERENCE SIGNS LIST}

| | |
|---|---|
| 1 | Secondary seal |
| 2 | Rotating shaft |
| 3 | Case (holding member) |
| 4 | Rotating seal ring |
| 4a | Sliding surface |
| 5 | Housing |
| 6 | Stationary seal ring |
| 6a | Sliding surface |
| 9 | Spring |
| 10 | Mechanical seal |
| 11 | Base portion |
| 11a, 11b | Extended portion |
| 12 | Radially outer side expanded portion |
| 13 | Radially inner side expanded portion |
| A | Atmosphere |
| F | Sealed fluid |

**Claims**

1.   A secondary seal formed in an annular shape, sandwiched by a rotating seal ring and a holding member that holds the rotating seal ring in a radial direction, and configured to seal a portion between the rotating seal ring and the holding member,
wherein in every section perpendicular to a circumferential direction of the secondary seal, an area of the section is smaller on a radially inner side of an axial direction line that passes through a radial center of the section than on a radially outer side of the axial direction line.

2.   The secondary seal according to claim 1,
wherein the secondary seal is made of one material.

3.   The secondary seal according to claim 2,
wherein the secondary seal has a radially outer side expanded portion and a radially inner side expanded portion, each of the radially outer side expanded portion and the radially inner side expanded portion has a curve shape that is projected in the radial direction, and the radially inner side expanded portion has a smaller curvature radius than the radially outer side expanded portion.

4.   The secondary seal according to claim 3,
wherein between the radially inner side expanded portion and the radially outer side expanded portion, a base portion having an axial dimension that is not less than an axial dimension of part of the radially outer side expanded portion or the holding member contact with the rotating seal ring in is provided.

5.   The secondary seal according to claim 4,
wherein the axial dimension of the base portion is not less than a radial dimension between the rotating seal ring and the holding member at a point where the secondary seal is sandwiched.

6.   The secondary seal according to any one of claims 1 to 5,
wherein the secondary seal is formed in a symmetrical shape in an axial direction.

Fig.1

OTHER SIDE ←——→ ONE SIDE

Fig.2

(a)

(b)

Fig.3

Fig.4 (a)

(b)

(c)

## INTERNATIONAL SEARCH REPORT

| International application No. |
| --- |
| **PCT/JP2023/028673** |

**A. CLASSIFICATION OF SUBJECT MATTER**

*F16J 15/38*(2006.01)i
FI: F16J15/38

According to International Patent Classification (IPC) or to both national classification and IPC

**B. FIELDS SEARCHED**

Minimum documentation searched (classification system followed by classification symbols)

F16J15/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | Microfilm of the specification and drawings annexed to the request of Japanese Utility Model Application No. 65734/1991 (Laid-open No. 23879/1992) (EAGLE IND CO., LTD.) 26 February 1992 (1992-02-26), p. 6, line 7 to p. 9, line 2, fig. 1-4 | 1-3, 6 |
| A | | 4-5 |
| A | Microfilm of the specification and drawings annexed to the request of Japanese Utility Model Application No. 142155/1990 (Laid-open No. 80156/1991) (KOMATSU MFG CO., LTD.) 16 August 1991 (1991-08-16), p. 6, line 14 to p. 10, line 16, fig. 1-3 | 1-6 |
| A | JP 2000-27997 A (BELLCO S.P.A) 25 January 2000 (2000-01-25) paragraphs [0009]-[0021], fig. 1-4 | 1-6 |
| A | JP 2010-516560 A (BELLCO S.P.A) 20 May 2010 (2010-05-20) paragraphs [0040]-[0078], fig. 6-9 | 1-6 |
| A | JP 2021-116885 A (EAGLE INDUSTRY CO., LTD.) 10 August 2021 (2021-08-10) paragraphs [0018]-[0076], fig. 1-9 | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 571 152 A1

## INTERNATIONAL SEARCH REPORT
### Information on patent family members

International application No.

**PCT/JP2023/028673**

| Patent document cited in search report | | | Publication date (day/month/year) | Patent family member(s) | Publication date (day/month/year) |
|---|---|---|---|---|---|
| JP | 4-23879 | U1 | 26 February 1992 | (Family: none) | |
| JP | 3-80156 | U1 | 16 August 1991 | (Family: none) | |
| JP | 2000-27997 | A | 25 January 2000 | US 6176491 B1 column 2, line 34 to column 5, line 15, fig. 1-4 EP 953497 A2 KR 10-1999-0083547 A | |
| JP | 2010-516560 | A | 20 May 2010 | US 2010/0090523 A1 paragraphs [0039]-[0082], fig. 6-9 WO 2008/093160 A1 CN 101626945 A KR 10-2009-0104843 A | |
| JP | 2021-116885 | A | 10 August 2021 | (Family: none) | |

Form PCT/ISA/210 (patent family annex) (January 2015)

**REFERENCES CITED IN THE DESCRIPTION**

**Patent documents cited in the description**

- WO 2015108107 A